# FASCICULE DE BREVET EUROPEEN

(11) **EP 0 687 048 B1**
(45) Date de publication et mention de la délivrance du brevet: **22.10.1997**
(21) Numéro de dépôt: 95401302.5
(22) Date de dépôt: 02.06.1995
(51) Int. Cl.: H02G 1/08, H02G 1/06, E02F 5/10

(54) **Procédé et dispositif de pose d'un câble souterrain de télécommunications**
Verfahren und Vorrichtung zum Verlegen eines unterirdischen Fernmeldekabels
Process and device for laying an underground telecommunication cable

(30) Priorité: 06.06.1994 FR 9406904
(43) Date de publication de la demande: 13.12.1995
(73) Titulaire: FRANCE TELECOM, 75015 Paris (FR)
(72) Inventeur: Pecot, Alain, F-22300 Lannion (FR); Lesueur, Philippe, F-22730 Tregastel (FR)
(74) Mandataire: Armengaud Ainé, Alain

(56) Documents cités:
- DE-A- 3 616 627
- US-A- 3 390 533
- US-A- 4 529 148
- US-A- 4 896 997

## Description

La présente invention est relative à un procédé pour la pose d'un câble de transport ou de distribution, notamment pour télécommunications, dans une tranchée souterraine, ce câble étant disposé à l'intérieur d'un tube de protection en matière plastique ou similaire. L'invention concerne également un dispositif pour la mise en oeuvre de ce procédé.

Parmi les méthodes de pose d'un câble de télécommunications, l'une d'entre elles, la plus généralement utilisée, consiste à réaliser d'abord la mise en place du tube à l'intérieur de la tranchée préalablement creusée avant de recouvrir celle-ci, le câble étant ensuite tiré ou poussé à l'intérieur de ce tube, soit par traction au moyen d'un lien fixé en bout du câble et dont l'extrémité opposée est enroulée sur un treuil ou analogue au-delà du tube (par exemple US-A-4 529 148), soit par soufflage d'air comprimé exerçant une poussée sur un furet solidarisé du câble et dont le diamètre externe est sensiblement égal à celui du tube afin d'obtenir une relative étanchéité (par exemple DE-A-3 616 627). Une variante peut consister à utiliser une tête magnétique pour tirer l'extrémité du câble dans le tube au fur et à mesure du déplacement d'une machine qui assure la mise en place du tube dans la tranchée.

Mais avec ces solutions de tirage et de soufflage, les longueurs de câble qui peuvent être mises en place à l'intérieur du tube sont relativement limitées, ce qui exige, notamment dans le cas où on utilise un filin de traction, de prévoir de place en place des chambres intermédiaires, permettant de tirer le câble tronçon par tronçon dans le tube entre deux chambres successives et également de régénérer l'effort de traction avec un entraîneur intermédiaire à chenille, d'un tronçon au suivant. De plus, lorsque le parcours présente des courbes, la mise en place du câble est rendue encore plus difficile du fait surtout de l'accroissement des efforts de traction ou de poussée nécessaires.

On connaît par ailleurs des méthodes (par exemple US-A-3 390 533) où le câble est directement posé dans le sol au moyen d'un engin qui simultanément ouvre celui-ci pour constituer une tranchée étroite dans laquelle le câble est déroulé à partir d'un touret au fur et à mesure du déplacement de l'engin, la tranchée étant ensuite refermée derrière l'engin. Dans ce cas, le câble doit comporter lui-même des moyens qui assurent sa protection vis-à-vis de l'environnement et par ailleurs être renforcé mécaniquement pour résister aux contraintes inhérentes à ce procédé de mise en place, ce qui accroît notablement son prix de revient. De plus, une fois le câble placé dans sa tranchée et celle-ci refermée, il n'est pas possible de changer le câble lui-même, sauf à procéder à une réouverture de la tranchée, ce qui peut poser des problèmes délicats, en particulier en milieu urbain ou dans un environnement difficile.

Une troisième solution, qui combine en quelque sorte les précédentes, consiste à introduire le câble dans son tube de protection externe en usine, par exemple par extrusion du tube en continu autour du câble, et à livrer l'ensemble, enroulé sur un touret ou similaire, sur le site où la pose dans la tranchée doit être réalisée.

Cette technique permet de conserver les avantages des méthodes citées en premier lieu, en assurant une protection du câble dans le sol et surtout en permettant une réutilisation du tube définitivement enterré, le câble logé dans celui-ci pouvant être éventuellement retiré et remplacé par un autre. Cette même technique permet d'éviter les inconvénients des secondes méthodes, le câble n'exigeant pas nécessairement d'être renforcé d'un point de vue mécanique par une gaine externe généralement en acier, imposant dès lors une protection des conducteurs de ce câble contre les courants induits, qui impose des mises à la terre contraignantes.

Notamment, cette solution permet d'envisager des conditions économiques plus favorables, en évitant les opérations nécessaires pour la mise en place du câble à l'intérieur du tube sur le site de pose lui-même.

Mais cette dernière méthode présente encore des inconvénients, essentiellement liés à la topographie de l'environnement dans lequel le câble doit être mis en place, en particulier du fait d'obstacles qui peuvent se présenter sur le trajet de la tranchée recevant le tube contenant le câble, tels que des traversées de voirie, de cours d'eau, de voies de chemin de fer etc.... Ces obstacles nécessitent notamment la réalisation préalable dans le sol d'un tunnel ou d'un passage continu pour l'introduction du tube, en empêchant la réalisation de tranchées ouvertes, lesquelles peuvent être en outre interdites pour des raisons techniques ou réglementaires.

Or, la probabilité de rencontrer de tels obstacles n'est nullement négligeable, notamment avec les solutions actuelles où les longueurs de tube contenant le câble à poser d'un seul tenant sont passées de 300 m environ pour des câbles à conducteurs métalliques, à 2 400 m en règle générale pour des câbles à fibres optiques.

Du fait de la présence du câble dans le tube, on ne peut couper celui-ci à l'endroit du point singulier rencontré. Tout au contraire, au droit de ce dernier, il est nécessaire de dévider le tube avec le câble à l'intérieur de celui-ci pour accéder à l'extrémité qui se trouve sur le fût du touret, en le déposant sur le sol, notamment selon un profil en huit, afin d'éviter des phénomènes de torsion, avant de franchir l'obstacle.

Le tube avec le câble à l'intérieur, ainsi dévidé, peut être mis en place au travers de l'obstacle par fonçage ou autre procédé, en ménageant un passage continu à travers lequel la longueur totale de câble doit être passée. Le tube avec son câble est ensuite reconditionné sur le touret pour reprendre l'opération qui consiste à l'enfouir au fond de la tranchée. Cette opération a pour but d'éviter une épissure sur le câble, nécessaire dans le cas d'une coupure du tube ; en effet, on ne peut pas retirer le câble du tube à cause du frottement de l'un sur l'autre, sur le touret ou au sol lorsque le tube est disposé sur ce dernier en formant des figures en huit. Une épissure supplémentaire est par ailleurs toujours préjudiciable au bilan technique et économique de l'installation de mise en place d'un tel câble.

On conçoit en conséquence que ces opérations nécessitent une main-d'oeuvre importante, des interventions nombreuses sur le câble et le tube et un espace de rangement au sol suffisant. Il en résulte des risques pour le câble lui-même, notamment lorsqu'il est constitué de fibres optiques, avec dans tous les cas un coût notable et surtout un sectionnement du câble préjudiciable. En pratique d'ailleurs, cette solution n'est envisageable que dans des cas limités, pour des sections de tube n'ayant à franchir qu'un seul obstacle et lorsque ce dernier n'est situé qu'à quelques centaines de mètres de l'une des extrémités de la section à poser.

La présente invention a pour objet un procédé et un dispositif de pose d'un câble souterrain de grande longueur logé dans un tube de protection externe, le câble et le tube étant mis en place ensemble dans une tranchée de réception, qui évite ces inconvénients, la méthode proposée permettant en particulier de franchir les obstacles ou points singuliers rencontrés sur le trajet du câble dans des conditions optimales d'efficacité et pour un prix de revient de l'opération très largement diminué, sans dévidage puis rembobinage du câble lui-même, mais seulement du tube extérieur en matière plastique.

De façon synthétique, le procédé selon l'invention consiste à associer deux techniques, l'une assurant la mise en place du tube contenant le câble sur une longueur donnée par un engin de pose qui réalise au fur et à mesure de son déplacement la formation d'une tranchée et la dépose du tube au fond de celle-ci, l'autre l'introduction continue du câble dans le tube par soufflage au moyen d'un furet porté par le câble, de façon concomitante avec le déplacement de l'engin.

A cet effet et selon l'invention, le procédé considéré, dans lequel on utilise un premier et un second tourets rotatifs dont le premier, en position fixe sur le sol à l'extrémité initiale d'une tranchée de réception de ce câble, supporte celui-ci en permettant son déroulement continu au fur et à mesure de la mise en place du câble dans la tranchée, et dont le second assure le déroulement simultané d'un tube de protection externe du câble, ce second touret étant porté par un engin mobile, propre à réaliser lors de son déplacement sur le sol la formation de la tranchée et la pose du tube entourant le câble à l'intérieur de celle-ci, se caractérise en ce qu'il consiste à munir le câble d'un furet de traction fixé en bout de ce câble et adapté à provoquer son entraînement dans le tube sous l'effet d'une pression d'air comprimé, créée derrière ce furet par l'extrémité initiale de la tranchée où le câble pénètre dans le tube, le furet entraînant le câble étant arrêté par frottement sur au plus la seconde spire du tube enroulé sur le second touret, et à maintenir en permanence la pression derrière le furet à l'intérieur du tube, de telle sorte qu'il conserve toujours la même position relative dans la spire du tube enroulé sur le second touret, indépendamment du déplacement de l'engin et de la dépose du tube contenant le câble au fond de la tranchée.

Le dispositif pour la mise en oeuvre de ce procédé se caractérise pour sa part en ce qu'il comporte deux tourets, dont le premier supporte le câble et est disposé en position fixe à l'extrémité initiale de la tranchée et dont le second est porté par un engin mobile comprenant un soc pour la réalisation de la tranchée au fur et à mesure de son déplacement, ce second touret supportant le tube de protection du câble logé à l'intérieur de ce tube, un furet de tirage du câble fixé en bout de celui-ci, un compresseur d'air pour créer derrière le furet dans le tube un effort de poussée continu, et des moyens pour réaliser l'étanchéité du tube à son extrémité par laquelle pénètre le câble, reliée au compresseur.

Avantageusement et de façon en elle-même connue dans la technique de soufflage d'un furet de traction d'un câble à l'intérieur d'un tube ou d'une conduite de protection externe, le dispositif peut comporter, selon la longueur du tube dans la tranchée, des stations de régénération de la pression d'air comprimé, pour maintenir sur le furet un effort de poussée sensiblement identique à lui-même au fur et à mesure de son déplacement à l'intérieur du tube progressivement déposé dans la tranchée.

De préférence également, les moyens d'étanchéité disposés à l'extrémité du tube par laquelle pénètre le câble, peuvent être associés, en amont par rapport au sens de déplacement du câble entraîné par le furet, à une chenille de poussée mécanique, créant sur la surface externe du câble un effort complémentaire à son entrée dans le tube.

L'invention consiste ainsi à réaliser la pose simultanée du câble et du tube qui l'entoure, quelle que soit la longueur de la tranchée, du fait du déplacement du furet tirant le câble à l'intérieur de ce tube jusqu'à une position qui reste toujours la même, se situant sensiblement au niveau de la première ou au plus de la seconde spire du tube enroulé sur le second touret.

Au fur et à mesure que celui-ci se dévide pour permettre, avec l'avance de l'engin formant la tranchée, la dépose du tube, le furet qui tire le câble avance d'autant dans le tube, en gardant une position sensiblement constante.

Le soufflage du câble par le furet sous l'effet de la pression d'air comprimé introduit par l'extrémité du tube au début de la tranchée, voire de place en place selon la longueur de cette dernière, provoque donc à tout moment la mise sous tension de l'extrémité du câble, qui est ainsi tiré dans le tube jusqu'au moment où, du fait du frottement du furet et du câble à l'intérieur du tube, et également de l'effet de cabestan résultant de l'enroulement du tube sur son touret, ce furet est arrêté en position dans le tube. En revanche, du fait que la pression se maintient en permanence sur le furet, celui-ci continue son avance relative dans le tube en entraînant le câble, à chaque fois d'une longueur qui correspond exactement à celle déroulée lorsque ce tube est mis en place dans la tranchée.

Ainsi, à titre indicatif, avec un furet fixé à l'extrémité d'un câble de 13 mm de diamètre, poussé sous une pression de 14 bars dans un tube de diamètre interne de 40 mm, on constate que le furet se bloque sur la première spire du tube, lorsque le second touret portant celui-ci présente lui-même un diamètre de 3,10 m.

Le procédé selon l'invention permet dès lors d'assurer le passage d'un point singulier de la façon suivante.

Lorsque l'engin de réalisation de la tranchée et de pose simultanée du tube contenant le câble au fond de celle-ci, se trouve devant un obstacle empêchant la poursuite de son déplacement, le mode opératoire consiste à cet instant à interrompre le soufflage, puis à dérouler à la surface du sol à partir du second touret une longueur de tube correspondant à celle de la première spire de celui-ci sur ce touret.

Dans l'étape suivante, on coupe le tube au-delà de l'extrémité du câble et du furet, puis on fait franchir l'obstacle au tube vide, par fonçage ou autre technique classique, sur la longueur correspondant au déroulement de la spire, voire sur une longueur légèrement plus importante.

On amène alors l'engin de pose et le second touret porté par celui-ci avec le tube vide, de l'autre côté de l'obstacle à franchir ; après quoi, on passe le câble dans le tronçon de tube préalablement foncé au travers de l'obstacle jusqu'à le faire sortir à l'extrémité opposée.

Dans l'étape finale, on raccorde le tronçon de tube foncé à l'extrémité libre de ce même tube sur le touret porté par l'engin de pose et on crée à nouveau dans celui-ci, derrière le furet une pression d'air comprimé qui entraîne le câble dans le tronçon en le dévidant du premier touret puis, au-delà, le déplace dans la première spire du tube sur le second touret, les divers éléments se retrouvant dans la position qu'elles occupaient avant de rencontrer l'obstacle.

On reprend ensuite l'opération de déplacement de l'engin avec formation de la tranchée et dépose dans celle-ci du tube contenant le câble, le furet se déplaçant en permanence dans la première spire du tube, comme décrit plus haut.

Lorsque le tube est associé selon sa longueur dans la conduite à des stations de régénération de l'air comprimé, on peut ainsi obtenir des longueurs de pose pratiquement sans limites, en particulier sans qu'il soit nécessaire d'effectuer aucune épissure sur le câble lui-même, seul le tube étant coupé puis raccordé par des manchons de liaison ou autres moyens similaires, au-delà de chaque obstacle franchi de la façon précitée.

Ces stations de régénération sont disposées en des emplacements définis à chaque fois en fonction des limites de tirage du câble par le furet, lequel de façon connue peut comporter un organe émetteur dont la position est repérée par un moyen de détection approprié prévu sur l'engin portant le second touret, de manière à permettre la signalisation de tout décrochage éventuel du furet.

Chaque station peut avantageusement être réunie à un compresseur distinct ou bien toutes les stations à un compresseur unique, pour autant que celui-ci soit dimensionné en vue de cette utilisation.

L'engin de pose du tube contenant le câble est de même classique pour ce type d'opération. Il peut notamment comporter un soc comprenant une lame ouvrant le sol à la manière d'une charrue, ce soc étant associé à une goulotte attenante, prévue derrière la lame, pour le guidage du tube contenant le câble au fur et à mesure du déplacement de l'engin sur le sol. Avantageusement, la lame du soc peut être associée à un dispositif vibrant pour faciliter sa pénétration dans le sol sur la profondeur souhaitée. De préférence également, la lame comporte éventuellement des dents, permettant de faciliter son passage dans le sol, selon la direction de la tranchée.

La goulotte de guidage présente un rayon de courbure tel qu'il puisse être facilement accommodé par le tube contenant le câble, sans risques de détérioration de ce dernier, notamment lorsqu'il est constitué de fibres optiques. L'engin de pose peut par ailleurs comporter derrière le soc et la goulotte, un mécanisme de compactage pour refermer la tranchée et tasser le sol.

D'autres caractéristiques du procédé et du dispositif de pose d'un câble souterrain selon l'invention, apparaîtront encore à travers la description qui suit d'un exemple de réalisation, donné à titre indicatif et non limitatif, en référence au dessin annexé, sur lequel :
- La Figure 1 est une vue schématique en coupe longitudinale de l'installation considérée.
- La Figure 2 est une vue en coupe à plus grande échelle, illustrant un détail de l'engin de pose du tube de protection du câble dans la tranchée de réception de ce tube.

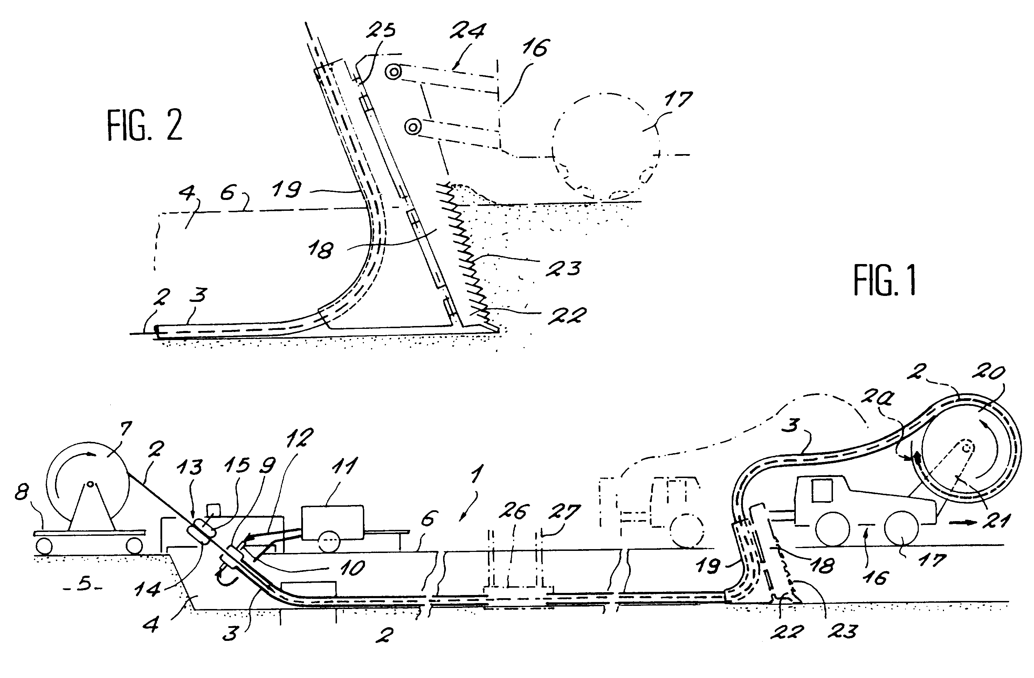

Sur la Figure 1, la référence 1 désigne dans son ensemble le dispositif proposé pour la mise en place d'un câble 2, notamment du genre câble de télécommunications à l'intérieur d'un tube de protection en matière plastique 3, l'ensemble constitué par ce câble et ce tube étant à disposer dans le fond d'une tranchée 4 ménagée dans le sol 5, avant que celle-ci ne soit recouverte par une épaisseur appropriée 6 de terre, la refermant au-dessus du tube.

Le câble 2 est déroulé au fur et à mesure de sa mise en place avec le tube 3 dans la tranchée 4 à partir d'un premier touret 7 porté par un chariot 8, permettant d'amener ce câble à proximité de l'extrémité initiale de la tranchée.

Au voisinage de cette extrémité, le tube 3 comporte un boîtier 9, raccordé en bout du tube et permettant l'introduction du câble en continu à l'intérieur du tube en maintenant une étanchéité relative vis-à-vis de l'extérieur, un tel boîtier, en lui-même connu dans la technique de soufflage d'un câble en conduite tubulaire, n'étant pas décrit en détail ici. Ce boîtier est raccordé par un embout de liaison 10 à un compresseur d'air comprimé 11 permettant d'injecter dans le tube 3, à travers le boîtier un débit d'air approprié fourni par le compresseur à travers une tubulure 12.

De façon également bien connue dans la technique, le câble 2 est solidarisé à son extrémité introduite dans le tube 3 à travers le boîtier 5, d'un furet de traction 2a dont la dimension transversale est sensiblement égale au diamètre interne du tube, de telle sorte que, la pression de l'air comprimé, délivré par le compresseur 11, assure contre le furet un effort de poussée permettant son déplacement à l'intérieur du tube en entraînant le câble sur une distance qui dépend de la pression de l'air, du diamètre du tube et du poids du câble lui-même.

Avantageusement, le dispositif de soufflage pneumatique du câble 2 à l'intérieur du tube 3 peut être complété en prévoyant, à l'entrée du tube au début de la tranchée, avant le boîtier d'introduction étanche 9, un mécanisme de poussée 13, permettant d'exercer sur le câble un effort complémentaire facilitant son déplacement dans le tube, ce mécanisme comportant deux chenilles 14 et 15 en appui sur le câble et tournant en sens inverse l'une de l'autre de manière à créer un effet de traction dans la direction selon laquelle le câble pénètre dans le tube.

La tranchée 4 est réalisée dans le sol 5 au moyen d'un engin 16 muni de roues 17 pour assurer son déplacement selon la direction de cette tranchée, l'engin comportant, attelé derrière lui dans le sens de son déplacement, un soc 18 permettant de former un sillon étroit et continu derrière l'engin, au fur et à mesure de l'avance de celui-ci.

Le soc 18 supporte derrière lui une goulotte 19 pour le guidage du tube 3, lequel se déroule à partir d'un second touret 20 (par opposition au premier touret 7 dévidant le câble 2), ce second touret 20 étant supporté par un bras 21 solidaire de l'engin 16 et se déplaçant en conséquence avec celui-ci au fur et à mesure qu'il réalise la tranchée 4. La goulotte 19 présente une courbure appropriée de manière à accommoder le tube 3 contenant le câble 2 sans créer de contraintes sur ce dernier, en particulier lorsqu'il est constitué par des fibres optiques.

Comme on le voit par ailleurs de façon plus détaillée sur la Figure 2, le soc 18 de formation de la tranchée comporte avantageusement une lame 22, éventuellement associée à un mécanisme (non représenté) permettant de lui faire subir des vibrations, cette lame étant éventuellement munie d'une série de dents 23 propres à faciliter la pénétration et la progression de la lame avec l'engin.

Cette lame 22 est de préférence solidarisée de l'engin au moyen d'un dispositif 24 à parallélogramme déformable permettant son soulèvement, la goulotte 19 étant elle-même articulée à l'arrière de la lame autour de charnières 25, de manière à lui permettre de suivre sans effort sur le tube 3 les variations éventuelles de profil de la tranchée.

Le fonctionnement du dispositif ainsi constitué a déjà été explicité et ne sera repris ici que de manière succincte.

Le tube 3, enroulé sur le second touret 20, est progressivement mis en place dans la tranchée 4 au fur et à mesure que cette dernière est réalisée par le soc 18 de l'engin 16, avant qu'un autre ensemble (non représenté) n'assure la fermeture de cette tranchée par remise en place de l'épaisseur de terre 6 correspondante.

Le tube 3 dans sa partie ainsi placée au fond de la tranchée 4 contient le câble 2, lequel a été préalablement soufflé dans le tube par l'air comprimé du compresseur 11, déplaçant le furet 2a lié à l'extrémité du câble dans le tube jusqu'à ce qu'il ne soit arrêté dans ce dernier sur la première, au plus sur la second spire du tube sur le second touret 20. Avantageusement, le furet 2a peut comporter de façon connue un organe émetteur (on représenté) dont la position est repérée par un moyen de détection approprié prévu sur l'engin de pose 16 portant ce second touret, de manière à permettre la signalisation de tout décrochage éventuel du furet.

Au fur et à mesure que l'engin 16 se déplace, le tube 3 contenant le câble 2 s'introduit dans ce dernier en conservant sensiblement la même position relative sur la spire du tube, laquelle est en permanence ainsi garnie par le câble au fur et à mesure de sa dépose dans la tranchée.

Avantageusement, on peut prévoir, de place en place selon la longueur de la tranchée, des postes 26 pour régénérer la pression d'air comprimé dans le tube, ces postes étant alimentés par des conduites 27 raccordées au compresseur 11 à l'entrée de la conduite si celui-ci est suffisamment dimensionné, ou à d'autres compresseurs analogues disposés au voisinage de ces postes.

On réalise ainsi la mise en place du câble et du tube qui l'entoure quelle que soit la longueur de la conduite, le passage d'un obstacle pouvant être effectué de la manière déjà indiquée, en effectuant seulement le sectionnement du tube et non du câble, lequel est remis en place et à nouveau poussé dans le tube après passage de cet obstacle.

Bien entendu, il va de soi que l'invention ne se limite pas à l'exemple de réalisation plus spécialement décrit et représenté; elle en embrasse au contraire toutes les variantes.

## Revendications

1. Procédé de pose d'un câble souterrain de grande longueur, dans lequel on utilise un premier et un second tourets rotatifs (7, 20) dont le premier, en position fixe sur le sol à l'extrémité initiale d'une tranchée (4) de réception de ce câble (2), supporte celui-ci en permettant son déroulement continu au fur et à mesure de la mise en place du câble dans la tranchée, et dont le second assure le déroulement simultané d'un tube de protection externe (3) du câble, ce second touret étant porté par un engin mobile (16), propre à réaliser lors de son déplacement sur le sol la formation de la tranchée et la pose du tube entourant le câble à l'intérieur de celle-ci, caractérisé en ce qu'il consiste à munir le câble d'un furet de traction (2a) fixé en bout de ce câble et adapté à provoquer son entraînement dans le tube sous l'effet d'une pression d'air comprimé, créée derrière ce furet par l'extrémité initiale de la tranchée où le câble (2) pénètre dans le tube (3), le furet entraînant le câble étant arrêté par frottement sur au plus la seconde spire du tube enroulé sur le second touret (20), et à maintenir en permanence la pression derrière le furet à l'intérieur du tube, de telle sorte qu'il conserve toujours la même position relative dans la spire du tube enroulé sur le second touret, indépendamment du déplacement de l'engin et de la dépose du tube contenant le câble au fond de la tranchée.

2. Dispositif pour la mise en oeuvre du procédé selon la revendication 1, caractérisé en ce qu'il comporte deux tourets (7, 20), dont le premier supporte le câble (2) et est disposé en position fixe à l'extrémité initiale de la tranchée et dont le second (20) est porté par un engin mobile (16) comprenant un soc (18) pour la réalisation de la tranchée (4) au fur et à mesure de son déplacement, ce second touret supportant le tube de protection du câble logé à l'intérieur de ce tube, un furet (2a) de tirage du câble fixé en bout de celui-ci, un compresseur d'air (11) pour créer derrière le furet dans le tube un effort de poussée continu, et des moyens (9) pour réaliser l'étanchéité du tube à son extrémité par laquelle pénètre le câble, reliée au compresseur.

3. Dispositif selon la revendication 2, caractérisé en ce qu'il comporte, selon la longueur du tube (3) dans la tranchée (4), des stations de régénération (26) de la pression d'air comprimé, pour maintenir sur le furet un effort de poussée sensiblement identique à lui-même au fur et à mesure de son déplacement à l'intérieur du tube progressivement déposé dans la tranchée.

4. Dispositif selon la revendication 3, caractérisé en ce que chaque station de régénération (26) est réunie à un compresseur distinct ou toutes les stations à un compresseur commun.

5. Dispositif selon l'une quelconque des revendications 2 à 4, caractérisée en ce que les moyens d'étanchéité (9) disposés à l'extrémité du tube (3) par laquelle pénètre le câble (2), sont associés, en amont par rapport au sens de déplacement du câble entraîné par le furet (2a), à une chenille de poussée mécanique (13), créant sur la surface externe du câble un effort complémentaire à son entrée dans le tube.

6. Dispositif selon l'une quelconque des revendications 2 à 5, caractérisé ce que le soc (18) de formation de la tranchée (4) est vibrant et comprend une lame (22) ouvrant le sol (5) à la manière d'une charrue, ce soc étant associé à une goulotte attenante (19), prévue derrière la lame, pour le guidage du tube (3) contenant le câble (2) au fur et à mesure du déplacement de l'engin (16).

7. Dispositif selon la revendication 6, caractérisé en ce que la lame (22) du soc (18) est associée à un mécanisme vibrant pour faciliter sa pénétration dans le sol (5) sur la profondeur souhaitée.

8. Dispositif selon l'une quelconque des revendications 6 ou 7, caractérisé en ce que la lame (22) du soc (18) comporte éventuellement des dents (23) venant creuser le sol dans la direction de la tranchée.

9. Dispositif selon l'une quelconque des revendications 2 à 8, caractérisé en ce que le furet (2a) fixé à l'extrémité du câble (2) comporte un organe émetteur dont la position est repérée par un moyen de détection approprié prévu sur l'engin de pose (16) portant le second touret (20), de manière à permettre une signalisation de tout décrochage éventuel du furet.

10. Application du procédé selon la revendication 1, pour permettre le franchissement d'un obstacle interrompant la continuité de la tranchée, caractérisée en ce qu'elle consiste à mettre en oeuvre un mode opératoire selon lequel on interrompt le soufflage du câble (2) dans le tube (3), on déroule à la surface du sol à partir du second touret (20) une longueur de tube correspondant à celle de la première spire de celui-ci sur ce touret, on coupe le tube au-delà de l'extrémité du câble et du furet (2a), on fait franchir l'obstacle au tube vide, par fonçage ou autre technique classique, sur la longueur correspondant au déroulement de la spire, voire sur une longueur légèrement plus importante, on amène l'engin de pose (16) et le second touret porté par celui-ci avec le tube (3) vide, de l'autre côté de l'obstacle à franchir, on passe le câble (2) dans le tronçon de tube préalablement foncé au travers de l'obstacle jusqu'à le faire sortir à l'extrémité opposé, on raccorde le tronçon de tube foncé à l'extrémité libre de ce même tube sur le touret porté par l'engin de pose, et on crée à nouveau dans celui-ci, derrière le furet, une pression d'air comprimé qui entraîne le câble dans le tronçon en le dévidant du premier touret puis, au-delà, le déplace dans la première spire du tube sur le second touret.

## Patentansprüche

1. Verfahren zum Verlegen eines unterirdischen Kabels großer Länge, wobei eine erste und eine zweite drehbare Kabeltrommel (7, 20) verwendet werden, von denen die erste fest auf dem Boden am vorderen Ende eines dieses Kabel (2) aufnehmenden Kabelgrabens (4) steht und das Kabel trägt, und dabei sein kontinuierliches Abrollen im Maße des Verlegens des Kabels in den Graben ermöglicht, und von denen die zweite das gleichzeitige Abrollen eines äußeren Schutzrohres (3) des Kabels gewährleistet, wobei die zweite Trommel von einer beweglichen Maschine (16) getragen wird, die bei ihrer Fortbewegung auf dem Boden den Graben bildet und das das Kabel umgebende Rohr in den Graben verlegt, **dadurch gekennzeichnet, daß** es darin besteht, das Kabel mit einem Zugmolch (2a) auszustatten, der am Ende des Kabels befestigt ist und so ausgebildet ist, daß er unter der Wirkung von Druckluft, die hinter diesem Molch am vorderen Ende des Grabens, wo das Kabel (2) in das Rohr (3) eintritt, hergestellt wird, im Rohr mitgenommen wird, wobei der das Kabel mitnehmende Molch durch Reibung spätestens in der zweiten Windung des auf die zweite Trommel (20) aufgewickelten Rohres stehenbleibt, und darin, den Druck hinter dem Molch im Inneren des Rohres permanent aufrechtzuerhalten, so daß der immer die gleiche Position in Bezug auf die Windung des auf die zweite Trommel aufgerollten Rohres einnimmt, unabhängig von der Fortbewegung der Maschine und vom Verlegen des das Kabel enthaltenden Rohres auf den Boden des Grabens.

2. Vorrichtung zur Anwendung des Verfahrens nach Anspruch 1, **dadurch gekennzeichnet, daß** sie zwei Trommeln (7, 20), von denen die erste das Kabel (2) trägt und fest am vorderen Ende des Grabens angeordnet ist, und die zweite (20) von einer Maschine (16) getragen wird, die eine Pflugschar (18) zur Herstellung des Grabens im Maße ihrer Fortbewegung aufweist, wobei die zweite Trommel das Rohr trägt, das das in seinem Inneren befindliche Kabel schützt, einen Molch (2a) zum Ziehen des Kabels, an dessen Ende er befestigt ist, einen Druckluftkompressor (11), der hinter dem Molch im Rohr einen kontinuierlichen Druck erzeugt, und Elemente (9) aufweist, die das Rohr an seinem mit dem Kompressor verbundenen Ende, in welches das Kabel eingeführt wird, abdichten.

3. Vorrichtung nach Anspruch 2, **dadurch gekennzeichnet, daß** sie entlang des Rohrs (3) im Graben (4) Zwischenstationen (26) zur Regenerierung der komprimierten Druckluft aufweist, um auf dem Molch einen Druck aufrechtzuerhalten, der im wesentlichen gleich dem ist, mit welchem der Molch im Inneren des Rohres fortbewegt wird, das kontinuierlich in den Graben verlegt wird.

4. Vorrichtung nach Anspruch 3, **dadurch gekennzeichnet, daß** jede Regenerierungsstation (26) mit einem eigenen, oder alle Stationen mit einem gemeinsamen Kompressor verbunden sind.

5. Vorrichtung nach einem der Ansprüche 2 bis 4, **dadurch gekennzeichnet, daß** die am Ende des Rohres (3), durch welches das Kabel (2) tritt, angeordneten Dichtungselemente (9) stromaufwärts bezogen auf die Bewegungsrichtung des vom Molch (2a) mitgenommenen Kabels, an eine mechanische Schubraupe (13) angeschlossen sind, die auf die äußere Oberfläche des Kabels eine zusätzliche Kraft bei seinem Eintritt in das Rohr ausübt.

6. Vorrichtung nach einem der Ansprüche 2 bis 5, **dadurch gekennzeichnet, daß** die den Graben (4) bildende Pflugschar (18) vibriert und eine Klinge (22) aufweist, die den Boden (5) wie ein Pflug öffnet, wobei diese Pflugschar an eine angesetzte Rinne (19) angeschlossen ist, die hinter der Klinge vorgesehen ist und zur Führung des das Kabel enthaltenden Rohres (3) bei der Fortbewegung der Maschine (16) dient.

7. Vorrichtung nach Anspruch 6, **dadurch gekennzeichnet, daß** die Klinge (22) der Pflugschar (18) an einen Vibrationsmechanismus angeschlossen ist, um ihr Eindringen in den Boden (5) in der gewünschten Tiefe zu erleichtern.

8. Vorrichtung nach einem der Ansprüche 6 oder 7, **dadurch gekennzeichnet, daß** die Klinge (22) der Pflugschar (18) eventuell Zähne (23) aufweist, die den Boden in Richtung des Grabens umgraben.

9. Vorrichtung nach einem der Ansprüche 2 bis 8, **dadurch gekennzeichnet, daß** der am Ende des Kabels (2) befestigte Molch (2a) einen Sender aufweist, dessen Position durch ein geeignetes Detektier-Element aufgespürt werden kann, das an der Verlegemaschine (16) vorgesehen ist, das die zweite Trommel (20) trägt, so daß jedes mögliche Ausklinken des Molches sofort angezeigt wird.

10. Anwendung des Verfahrens nach Anspruch 1, zum Überwinden eines die Kontinuität des Grabens unterbrechenden Hindernisses, **dadurch gekennzeichnet, daß** sie darin besteht, eine Arbeitsweise anzuwenden, bei der man das Einblasen des Kabels (2) in das Rohr (3) unterbricht, auf die Bodenoberfläche von der zweiten Trommel (20) eine Rohrlänge abrollt, die der ersten Windung des Rohres auf der Trommel entspricht, das Rohr jenseits des Kabelendes und des Molches (2a) abschneidet, das Hindernis durch Durchstoßen oder andere herkömmliche Technik über eine Länge, die der abgewickelten Windung entspricht oder diese Länge etwas übersteigt, mit dem leeren Rohr überwindet, die Verlegemaschine (16) und die zweite von ihm getragene Trommel mit dem leeren Rohr (3) auf die andere Seite des zu überwindenden Hindernisses bringt, das Kabel (2) in das Teilstück des Rohres einbringt, das vorher durch das Hindernis hindurch gestoßen wurde, bis es am anderen Ende wieder herauskommt, das durchgestoßene Rohrstück mit dem freien Ende des Rohres auf der von der Verlegemaschine getragenen Trommel verbindet und von neuem in diesem Rohr hinter dem Molch eine Druckluft erzeugt, die das Kabel im Teilstück mitnimmt und es von der ersten Trommel abwickelt und es darüberhinaus in die erste Windung des Rohres auf der zweiten Trommel bringt.

## Claims

1. Method for laying a long underground cable, in which use is made of a first and of a second rotary drum (7, 20), the first of which, in a fixed position on the ground at the initial end of a trench (4) for accommodating this cable (2), supports the latter allowing it to unwind continuously as the cable is laid in the trench, and the second of which allows the simultaneous unwinding of a tube (3) for the external protection of the cable, this second drum being borne by a mobile machine (16) capable, as it travels along the ground, of forming the trench and of laying the tube surrounding the cable inside this trench, characterized in that it consists in equipping the cable with a hauling pig (2a) fixed to the end of this cable and designed to carry it along inside the tube under the effect of a compressed-air pressure created behind this pig by the initial end of the trench where the cable (2) penetrates the tube (3), the pig carrying the cable along being halted by friction on at most the second turn of the tube wound onto the second drum (20), and in permanently maintaining the pressure behind the pig inside the tube so that it always retains the same relative position in the turn of the tube wound onto the second drum, independently of the travel of the machine and of the depositing of the tube containing the cable at the bottom of the trench.

2. Device for implementing the method according to Claim 1, characterized in that it includes two drums (7, 20), the first of which supports the cable (2) and is located at a fixed position at the initial end of the trench, and the second (20) of which is borne by a mobile machine (16) comprising a ploughshare (18) for making the trench (4) as it travels along, this second drum supporting the tube for protecting the cable housed inside this tube, a pig (2a) for hauling the cable fixed at the end thereof, an air compressor (11) for creating a continuous thrusting force inside the tube behind the pig and means (9) for sealing the tube at its end, connected to the compressor, via which the cable enters.

3. Device according to Claim 2, characterized in that it includes, along the length of the tube (3) in the trench (4), stations (26) for boosting the compressed-air pressure, in order to maintain a substantially constant thrust force on the pig as it travels along inside the tube progressively deposited in the trench.

4. Device according to Claim 3, characterized in that each boosting station (26) is connected to a separate compressor or all the stations are connected to a common compressor.

5. Device according to any one of Claims 2 to 4, characterized in that the sealing means (9) located at that end of the tube (3) via which the cable (2) enters are associated, upstream relative to the direction of travel of the cable carried along by the pig (2a), with a mechanical thrusting track (13) which creates on the outer surface of the cable a force complementing its entry into the tube.

6. Device according to any one of Claims 2 to 5, characterized in that the ploughshare (18) for forming the trench (4) vibrates and comprises a blade (22) opening up the ground (5) in the manner of a plough, this ploughshare being associated with a contiguous chute (19) provided behind the blade for guiding the tube (3) containing the cable (2) as the machine (16) travels along.

7. Device according to Claim 6, characterized in that the blade (22) of the ploughshare (18) is associated with a vibrating mechanism to ease its penetration into the ground (5) to the desired depth.

8. Device according to either one of Claims 6 and 7, characterized in that the blade (22) of the ploughshare (18) possibly includes teeth (23) which dig into the ground in the direction of the trench.

9. Device according to any one of Claims 2 to 8, characterized in that the pig (2a) fixed to the end of the cable (2) includes an emitter member, the position of which is identified by an appropriate detection means providing on the laying machine (16) bearing the second drum (20), so as to allow any possible detachment of the pig to be signalled.

10. Application of the method according to Claim 1 to allow an obstacle interrupting the continuity of the trench to be negotiated, characterized in that it consists in employing an operational method according to which the blowing of the cable (2) into the tube (3) is interrupted, a length of tube corresponding to that of the first turn thereof on the second drum (20) is unwound from this drum onto the surface of the ground, the tube is cut beyond the end of the cable and the pig (2a), the empty tube is made to negotiate the obstacle using driving or some other conventional technique, over the length corresponding to the unwinding of the turn, or even over a slightly greater length, the laying machine (16) and the second drum borne by the latter with the empty tube (3) is brought up to the other side of the obstacle to be negotiated, the cable (2) is passed through the section of tube which has been previously driven through the obstacle until it comes out of the opposite end, the driven length of tube is coupled to the free end of this same tube on the drum borne by the laying machine, and a compressed-air pressure is again created in this tube, behind the pig, which pressure carries the cable along in the section, paying it out from the first drum then, beyond that, makes it travel into the first turn of the tube on the second drum.
